# EUROPEAN PATENT SPECIFICATION

(11) **EP 3 564 746 B1**
(45) Date of publication and mention of the grant of the patent: **03.11.2021**
(21) Application number: 18741187.1
(22) Date of filing: 05.01.2018
(51) Int. Cl.: H04N 5/225, H04N 5/232, H04N 5/235, G03B 9/36, G03B 9/62, G03B 7/093, G03B 9/08, H04N 5/353

(54) **IMAGING DEVICE, IMAGING METHOD, AND PROGRAM**
BILDGEBUNGSVORRICHTUNG, BILDGEBUNGSVERFAHREN UND PROGRAMM
DISPOSITIF D'IMAGERIE, PROCÉDÉ D'IMAGERIE ET PROGRAMME

(30) Priority: 20.01.2017 JP 2017008310
(43) Date of publication of application: 06.11.2019
(73) Proprietor: Sony Group Corporation, Tokyo 108-0075 (JP)
(72) Inventor: YANA Kanako, Tokyo 108-0075 (JP); KAWATA Haruka, Tokyo 108-0075 (JP); IWASE Ayako, Tokyo 108-0075 (JP); URUSHIDO Hiroshi, Tokyo 108-0075 (JP); TAKAE Yu, Tokyo 108-0075 (JP); YOSHIMOTO Akiko, Tokyo 108-0075 (JP)
(74) Representative: D Young & Co LLP
(86) International application number: PCT/JP2018/000081
(87) International publication number: WO 2018/135313

(56) References cited:
- EP-A2- 2 175 638
- EP-A2- 2 453 646
- JP-A- 2002 176 588
- JP-A- 2002 199 328
- JP-A- 2003 264 743
- JP-A- 2011 099 965
- JP-B2- H0 695 733
- US-A1- 2005 200 744
- US-A1- 2011 293 257

## Description

### TECHNICAL FIELD

The present technology relates to an imaging device, an imaging method, and a program, and for example, relates to an imaging device, an imaging method, and a program having a mechanism that can make a user feel that imaging is performed at the time of imaging.

### BACKGROUND ART

In recent years, a digital still camera and a digital video camera including an imaging element such as a charge coupled device (CCD) and a complementary metal-oxide semiconductor (CMOS) sensor have been widely used. The digital still camera images a still image, and the digital video camera images a moving image. However, a digital still camera that can image a moving image and a digital video camera that can image a still image exist. Note that, hereinafter, in a case where the digital still camera and the digital video camera are not particularly distinguished from each other, there is a case where the digital still camera and the digital video camera are simply described as a "digital camera".

The digital camera described above includes, for example, a display unit including a liquid crystal display (LCD), and the like, and the digital camera is often formed to be capable of displaying an imaged image on the display unit. Furthermore, in recent years, some of the digital cameras described above perform image processing on the imaged image such as processing for detecting a region of a human face from the imaged image and adjusting colors of the detected region.

### CITATION LIST

### PATENT DOCUMENT

Patent Document 1: Japanese Patent Application Laid-Open No. 2013-055589

Other prior art includes US 2011/293257 A1, EP 2453646 A2 and US 2005/200144 A1.

### SUMMARY OF THE INVENTION

### PROBLEMS TO BE SOLVED BY THE INVENTION

Furthermore, some digital cameras in recent years include an electronic shutter for electronically controlling a shutter. The electronic shutter can increase a shutter speed than a mechanical shutter (referred to as mechanical shutter below).

However, some users prefer the mechanical shutter than the electronic shutter, because the users are familiar with the mechanical shutter. Furthermore, some of such users feel an imaging timing and an exposure time according to operation sounds, vibration, and the like of the mechanical shutter. Therefore, it has been desired that the feeling caused by the mechanical shutter can be obtained by the electronic shutter.

The present technology has been made in consideration of such circumstances, and it has been desired to provide a mechanism for making a user feel that imaging is performed.

### SOLUTIONS TO PROBLEMS

The present invention is defined by the claims.

Note that the imaging device may be an independent device or an internal block forming a single device.

Furthermore, the program can be provided by transmitting the program via a transmission medium or recording the program in a recording medium.

### EFFECTS OF THE INVENTION

According to one aspect of the present technology, it is possible to make a user feel that imaging is performed.

Note that the effects described herein are not necessarily limited and that the effect may be any effects described in the present disclosure.

### BRIEF DESCRIPTION OF DRAWINGS

Fig. 1 is a diagram of a configuration of an embodiment of an imaging device to which the present technology has been applied.
Fig. 2 is a diagram for explaining a configuration of the imaging device.
Fig. 3 is a view for explaining a configuration of a mechanical shutter.
Fig. 4 is a diagram for explaining imaging by control of the mechanical shutter.
Fig. 5 is a diagram for explaining imaging by control of an electronic shutter.
Fig. 6 is a diagram for explaining a shutter mode.
Fig. 7 is a diagram for explaining a shutter speed of the mechanical shutter.
Fig. 8 is a diagram for explaining the shutter speed of the mechanical shutter.
Fig. 9 is a diagram for explaining control in a mechanical shutter mode.
Fig. 10 is a diagram for explaining control in an electronic shutter mode.
Fig. 11 is a diagram for explaining control in an automatic shutter mode.
Fig. 12 is a diagram for explaining an operation timing of the mechanical shutter.
Fig. 13 is a diagram for explaining a recording medium.

### MODE FOR CARRYING OUT THE INVENTION

An embodiment for carrying out the present technology (referred to as an embodiment below) will be described below.

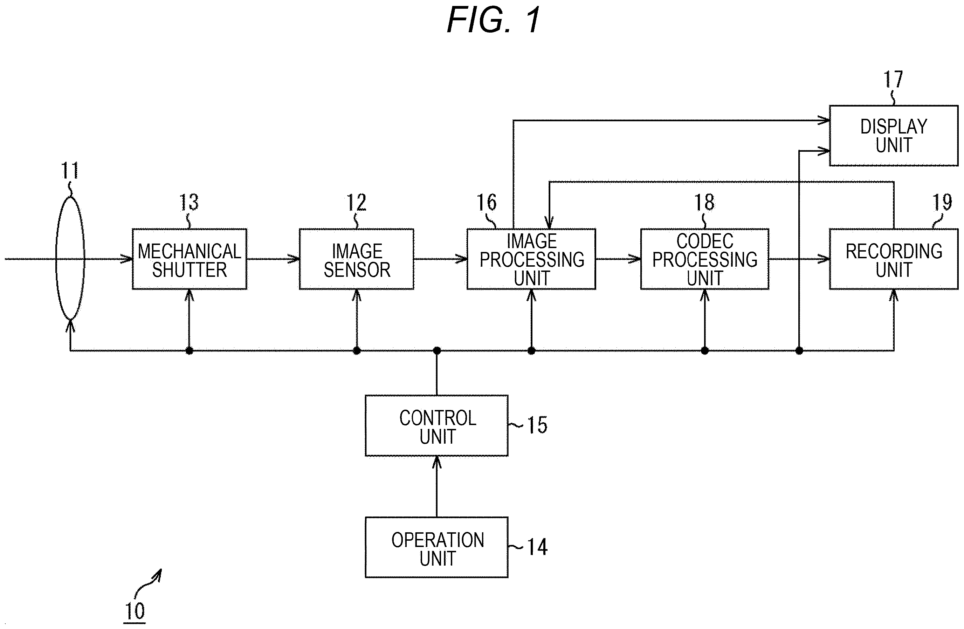

An example of a configuration of an imaging device according to the present embodiment will be described with reference to Fig. 1. Fig. 1 is a block diagram illustrating the example of the configuration of the imaging device according to the present embodiment and illustrates an example in a case where an image sensor 12 and an image processing LSI 30, as described later, are provided in the same casing. An imaging device 10 illustrated in Fig. 1 is a device for imaging a subject and outputting the image of the subject as an electrical signal.

As illustrated in Fig. 1, the imaging device 10 includes a lens unit 11, the image sensor 12, a mechanical shutter 13, an operation unit 14, a control unit 15, an image processing unit 16, a display unit 17, a codec processing unit 18, and a recording unit 19.

The lens unit 11 includes optical elements such as a lens and a diaphragm. The lens unit 11 is controlled by the control unit 15 to adjust a focal point to the subject, collect light from the focused position, and supply the light to the image sensor 12.

The image sensor 12 is, for example, an imaging element that images the subject and obtains digital data of the imaged image such as a complementary metal-oxide semiconductor (CMOS) image sensor, a charge coupled device (CCD) image sensor, and the like. The image sensor 12 is controlled by the control unit 15 and photoelectrically converts incident light and performs A/D conversion on a pixel value of each pixel to obtain the data of the imaged image of the subject (imaged image). The image sensor 12 is controlled by the control unit 15 and supplies the imaged image data obtained by imaging to the image processing unit 16.

The mechanical shutter 13 is provided on an optical path between the lens unit 11 and the image sensor 12 and controls a light shielding state of the light entering the image sensor 12. The mechanical shutter 13 is controlled by the control unit 15, and an exposure time of the image sensor 12 is controlled according to an operation of the mechanical shutter 13. The imaging device 10 further includes an electronic shutter. The electronic shutter controls a timing of reading from the image sensor 12 to control exposure.

The operation unit 14 includes, for example, a button, a dial, a touch panel, or the like and receives an operation input from a user and supplies a signal corresponding to the operation input to the control unit 15.

On the basis of the signal corresponding to the operation input of the user input by the operation unit 14, the control unit 15 controls drive of the lens unit 11, the image sensor 12, the mechanical shutter 13, the image processing unit 16, the display unit 17, the codec processing unit 18, and the recording unit 19 and makes each unit perform processing regarding imaging.

The image processing unit 16 performs various image processing, for example, black level correction, color mixture correction, defect correction, demosaic processing, matrix processing, gamma correction, YC conversion, and the like on an image signal supplied from the image sensor 12. Content of the image processing is arbitrary, and processing other than the processing described above may be performed. The image processing unit 16 supplies the image signal on which the image processing has been performed to the display unit 17 and the codec processing unit 18.

The display unit 17 is configured, for example, as a liquid crystal display, and the like and displays an image of the subject on the basis of the image signal from the image processing unit 16.

The codec processing unit 18 performs encoding processing in a predetermined manner on the image signal from the image processing unit 16 and supplies image data obtained as the result of the encoding processing to the recording unit 19.

The recording unit 19 records the image data from the codec processing unit 18. The image data recorded in the recording unit 19 is read by the image processing unit 16 as necessary so as to be supplied to the display unit 17, and an image corresponding to the image data is displayed.

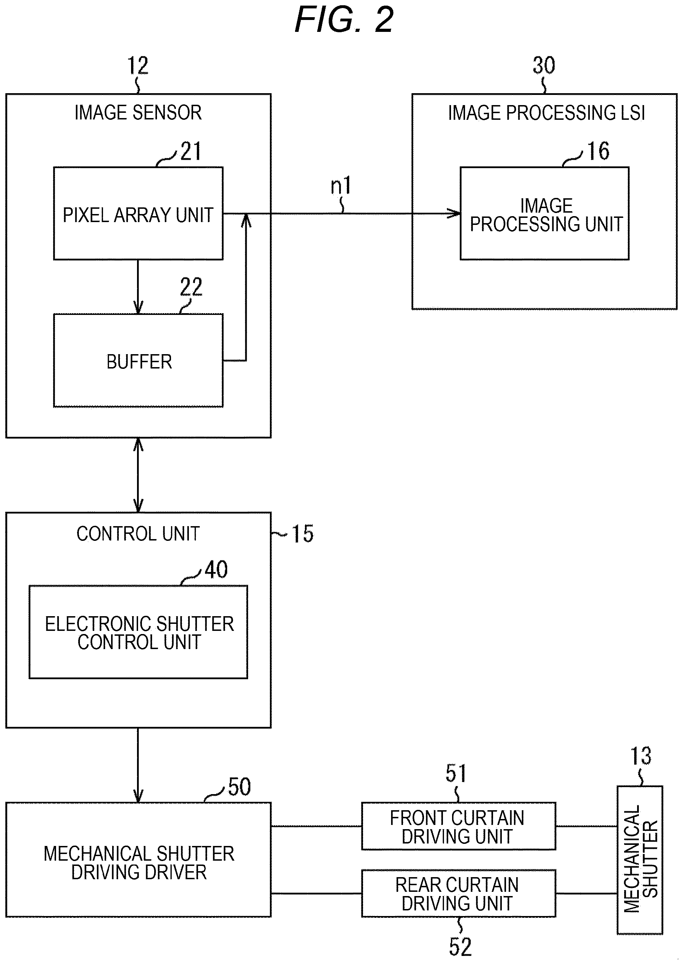

The example of the configuration of the imaging device according to the present embodiment will be further described with reference to Fig. 2. Fig. 2 is a diagram for explaining an example of a schematic configuration of the imaging device 10 illustrated in Fig. 1, and is a diagram for explaining an example of a configuration necessary for the following description.

The image sensor 12 includes a pixel array unit 21 in which a plurality of pixels is arranged in a matrix (array). Note that, in general, circuits other than the pixel array unit 21 are included. However, in the example illustrated in Fig. 2, for easy description, illustration of the circuits other than the pixel array unit 21 is omitted.

Furthermore, a reference numeral 30 schematically indicates an image processing large scale integration (LSI) which performs so-called image processing on an image signal supplied on the basis of a pixel signal from each pixel of the pixel array unit 21. The image processing includes, for example, black level correction, color mixture correction, defect correction, demosaic processing, matrix processing, gamma correction, YC conversion, and the like.

The image processing unit 16 schematically indicates an image processing function realized by the image processing LSI 30. Note that the image processing LSI 30 may include a configuration for executing a function other than the image processing. However, in the example illustrated in Fig. 2, for easy description, illustration of the configuration other than the image processing unit 16 is omitted.

Furthermore, a reference numeral n1 schematically indicates a flow (stream) of a signal between the image sensor 12 and the image processing LSI 30. In other words, the imaging device 10 illustrated in Fig. 2, the image sensor 12 photoelectrically converts the light entered via the optical element (lens unit 11 in Fig. 1) and performs A/D conversion on the pixel value of each pixel so as to generate the image signal indicating the imaged image of the subject. Then, the image sensor 12 outputs the generated image signal to the image processing unit 16 of the image processing LSI 30 as a stream n1.

Note that, as illustrated in Fig. 2, a buffer 22 may be provided in the image sensor 12. It is possible that signals read from the image sensor 12 are temporarily accumulated in the buffer 22, and thereafter, the signals are output to the image processing unit 16. Note that, here, description will be continued as using an example in which the buffer 22 is used when a plurality of images is imaged in a short time like continuous shooting.

The image processing LSI 30 obtains an image signal output from the image sensor 12 as the stream n1, performs image processing on the obtained image signal, and makes, for example, the display unit 17 (Fig. 1) display the image signal on which the image processing has been performed as a preview image (so-called through image). With this operation, a user can confirm the imaged image via the display unit.

The imaging device 10 illustrated in Figs. 1 and 2 includes a mechanism for mechanically controlling a shutter and a mechanism for electronically controlling a shutter. As a mechanical shutter, for example, a shutter referred to as a focal plane shutter and the like is applied. Hereinafter, the mechanical shutter is described as a mechanical shutter, and the electronic shutter is described as an electronic shutter.

The control unit 15 is a control unit including, for example, a microcomputer which controls each unit in the imaging device 10. The control unit 15 includes an electronic shutter control unit 40. The electronic shutter control unit 40 controls travel of the electronic shutter.

The electronic shutter is formed as a single function of the image sensor 12. Therefore, in Fig. 2, the electronic shutter control unit 40 is provided and is illustrated as a single function. However, the electronic shutter control unit 40 is configured as a single function of the control unit 15, and the control unit 15 controls the electronic shutter of the image sensor 12.

Here, to clarify the function for controlling the electronic shutter, the function is illustrated in the control unit 15 as the electronic shutter control unit 40, and description will be continued as assuming that the electronic shutter provided as the single function of the image sensor 12 is controlled by the electronic shutter control unit 40.

Furthermore, the electronic shutter is a shutter that controls exposure by controlling a timing of reading from the pixel of the pixel array unit 21. The electronic shutter control unit 40 performs control so that a desired exposure time is realized by controlling the timing of reading from the pixel of the pixel array unit 21. Here, the description will be continued as assuming that the control unit 15 sets the exposure time and the electronic shutter control unit 40 controls the exposure time of the electronic shutter on the basis of the setting.

A mechanical shutter driving driver 50 is a driver which controls a front curtain driving unit 51 and a rear curtain driving unit 52 for driving the mechanical shutter. Each of the front curtain driving unit 51 and the rear curtain driving unit 52 has a configuration including, for example, a motor (actuator) and the like for driving the mechanical shutter 13.

Since the imaging device 10 illustrated in Fig. 2 indicates a case where the focal plane shutter is applied, the imaging device 10 includes a front curtain and a rear curtain and includes the front curtain driving unit 51 and the rear curtain driving unit 52. The front curtain driving unit 51 drives the actuator for making the front curtain included in the mechanical shutter 13 travel. The rear curtain driving unit 52 drives the actuator for making the rear curtain included in the mechanical shutter 13 travel.

In other words, the mechanical shutter driving driver 50 issues an instruction to drive the mechanical shutter 13 to the front curtain driving unit 51 and/or the rear curtain driving unit 52 on the basis of an instruction from the control unit 15. The drive instruction includes, for example, power supply for driving the motor, and the like. The front curtain driving unit 51 and/or the rear curtain driving unit 52 drive the motor (actuator) on the basis of the drive instruction. The drive of the actuator makes the front curtain or the rear curtain of the mechanical shutter 13 travel.

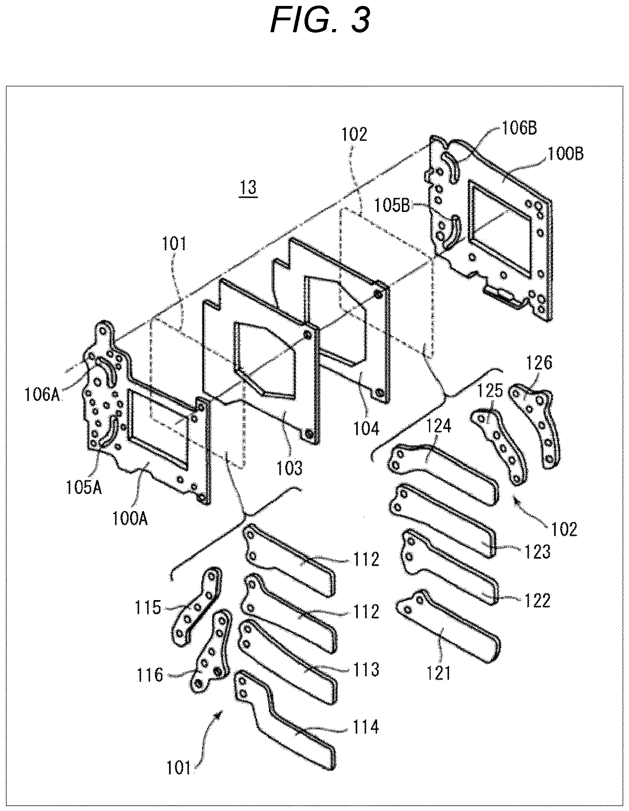

Fig. 3 is an exploded perspective view illustrating a configuration of the mechanical shutter 13. The mechanical shutter 13 has the configuration including a front curtain group 101, a rear curtain group 102, a light shielding plate 103, and an intermediate plate 104 between a pair of shutter substrates 100A and 100B.

The front curtain group 101 includes four divided curtains 111 to 114 (curtain), and the divided curtains 111 to 114 are coupled by two front curtain arms 115 and 116. The front curtain arms 115 and 116 are driven by the front curtain driving unit 51 including a predetermined drive shaft so that the divided curtains 111 to 114 are moved to be in a developed state ("shutter closed" state) and an overlapped state ("shutter opened" state).

As in the front curtain group 101, in the rear curtain group 102, four divided curtains 121 to 124 are coupled by two rear curtain arms 125 and 126.

Note that, a predetermined opening through which subject light passes is formed in each of the light shielding plate 103 and the intermediate plate 104. Furthermore, arc-shaped grooves 105A and 106A, and 105B and 106B, through which the drive shafts of the front curtain driving unit 51 and the rear curtain driving unit 52 are inserted, are respectively provided in the shutter substrates 100A and 100B.

In the imaging device 10 according to the present embodiment, whether imaging is performed under exposure control by the mechanical shutter 13 or imaging under exposure control by the electronic shutter is set according to a shutter speed or user's setting.

In a case where the mechanical shutter 13 performs the exposure control, an optical path opening operation performed by the front curtain group 101 is used as a front curtain in an exposure operation, and an optical path blocking operation performed by the rear curtain group 102 is used as a rear curtain in the exposure operation. The optical path opening operation by the front curtain group 101 is controlled by driving the actuator by the front curtain driving unit 51 (Fig. 2). Similarly, the optical path blocking operation by the rear curtain group 102 is controlled by driving the actuator by the rear curtain driving unit 52 (Fig. 2).

In a case where the exposure control by the electronic shutter is performed, the electronic shutter control unit 40 applies a reset signal to each pixel of the image sensor 12 so as to control the processing corresponding to the front curtain of the mechanical shutter 13 and controls the timing for reading from the image sensor 12 so as to control the processing corresponding to the rear curtain.

Note that, the control unit 15 supplies the reset signal to the pixel and controls the timing for reading the signal from the pixel when a shutter other than the electronic shutter (mechanical shutter) is used. As described above, in Fig. 2, the electronic shutter control unit 40 is provided and is illustrated as a single function. However, the electronic shutter control unit 40 is configured as a single function of the control unit 15, and the control unit 15 controls the electronic shutter of the image sensor 12.

Types of the electronic shutter include a rolling shutter type and a global shutter type. The rolling shutter type of the electronic shutter is a type for sequentially exposing and reading the pixel array unit 21 from the top portion. The global shutter type of the electronic shutter is a type for exposing and reading the entire pixel array unit 21 at the same time.

The present technology described below can be applied to both the rolling shutter type and the global shutter type as the electronic shutter.

### <Operation in a Case of Mechanical Shutter>

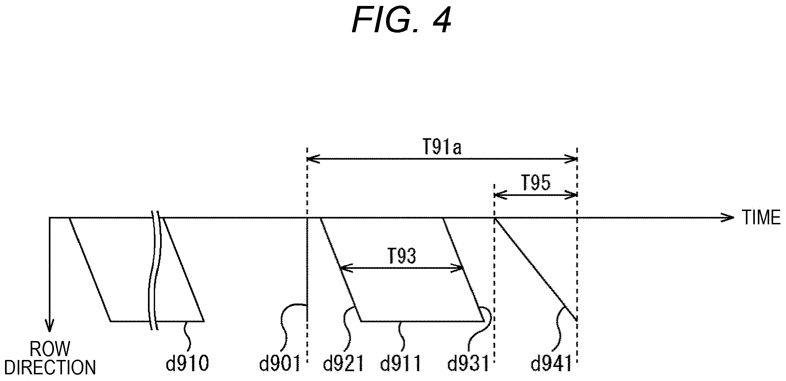

Next, with reference to Fig. 4, an example of a flow of processing will be described in which the image sensor 12 exposes (image) the image of the subject and the image signal indicating the exposed image is read by the image processing LSI 30 in the imaging device 10 illustrated in Fig. 2.

Fig. 4 illustrates an example of a schematic time chart in a case where a so-called focal plane shutter using the mechanical shutter 13 illustrated in Fig. 3 is applied and is a diagram for explaining an operation of the mechanical shutter driving driver 50 in Fig. 2.

In Fig. 4, the horizontal axis indicates time, and the vertical axis indicates a row direction of the pixel array unit 21. Furthermore, reference numerals d910 and d911 schematically indicate exposure times of each pixel of the pixel array unit 21. Note that it is assumed that the exposure time indicated by the reference numeral d910 indicate an exposure time of an image imaged before the exposure time indicated by the reference numeral d911.

Here, regarding the flow of the series of processing when the image of the subject is imaged, the exposure time d911 will be mainly described. First, at a timing indicated by the reference numeral d901, pixel signals accumulated in all the pixels of the pixel array unit 21 are reset by the control by the control unit 15. When the reset of all the pixels is completed, as indicated by a reference numeral d921, the front curtain driving unit 51 drives the actuator so that the front curtain group 101 which shields the light entering each pixel is move in the row direction. Accordingly, the light shielded by the front curtain group 101 enters each pixel, and the exposure starts.

Thereafter, as indicated by a reference numeral d931, the rear curtain driving unit 52 drives the actuator so that the rear curtain group 102 is moved along the row direction so as to follow the preceding front curtain group 101. Accordingly, the rear curtain group 102 shields the light entering each pixel, and the exposure ends. In other words, regarding each pixel, a period T93 indicated by the reference numerals d921 and d931 corresponds to the exposure time of the pixel, and in the example illustrated in Fig. 3, an exposure starting timing and an exposure ending timing of the pixels are different from each other row by row.

Furthermore, a reference numeral d941 in Fig. 4 schematically indicates processing regarding reading the pixel signals from each pixel. In other words, in the example illustrated in Fig. 4, after the exposure of all the pixels has been completed, the pixel signals are sequentially read from each pixel row by row. A reference numeral T95 indicates a period of the processing regarding reading of the pixel signals from all the pixels.

In other words, in a case illustrated in Fig. 4, after the exposure of all the pixels has been completed and the pixel signals have been read from all the pixels, the imaged image is generated.

In a case where such a mechanical shutter 13 performs imaging, even when a moving subject is imaged, distortion hardly occurs. Furthermore, it is possible to make the user feel imaging feedback as the feeling by the operation sounds and vibration of the mechanical shutter 13 (sound and vibration cause by travel of front curtain group 101 and rear curtain group 102).

### <Operation in a Case of Electronic Shutter>

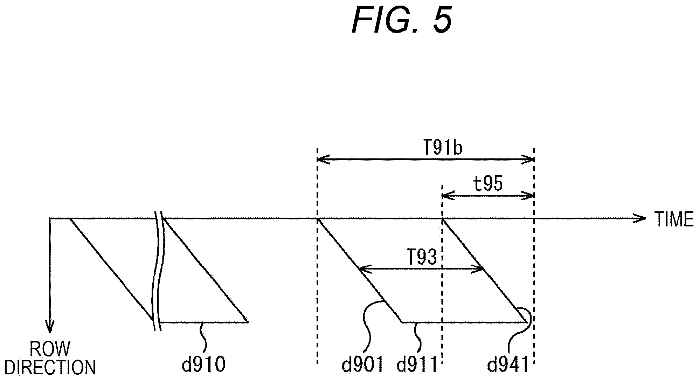

Next, with reference to Fig. 5, another example of a flow of processing will be described in which the image sensor 12 exposes (image) the image of the subject and the image signal indicating the exposed image is read by the image processing LSI 30 in the imaging device illustrated in Fig. 2.

Fig. 5 illustrates an example of a schematic time chart in a case where the exposure time of each pixel is electronically controlled without using the mechanical shutter 13, and is a diagram for explaining the operation of the electronic shutter control unit 40 in Fig. 2.

In Fig. 5, the horizontal axis indicates time, and the vertical axis indicates the row direction of the pixel array unit 21. Furthermore, as in Fig. 4, the reference numerals d910 and d911 schematically indicate exposure times of each pixel of the pixel array unit 21. It is assumed that the exposure time indicated by the reference numeral d910 indicate an exposure time of an image imaged before the exposure time indicated by the reference numeral d911.

In the example illustrated in Fig. 5, the reset of the pixel signals accumulated in each pixel is synchronized with start of the exposure of the pixel. In other words, as indicated by the reference numeral d901, the pixels are sequentially reset row by row by the control of the electronic shutter control unit 40, and when the reset of the pixels are completed, the exposure of the pixel is promptly started. Furthermore, end of the exposure of each pixel is synchronized with reading of the pixel signal from the pixel. In other words, as indicated by the reference numeral d941, when the exposure of each pixel ends, reading of the pixel signal from the pixel is promptly started.

With this configuration, in the example illustrated in Fig. 5, it is possible to start to read the pixel signal from each pixel without waiting for the completion of the exposure of all the pixels. Therefore, in the example illustrated in Fig. 5, there is a case where a period T91b from the start of the exposure to the completion of reading of the pixel signals from all the pixels can be shortened as compared with the example illustrated in Fig. 4.

In a case where such an electronic shutter performs imaging, the shutter speed can be increased, in other words, the exposure time can be shortened. Furthermore, the electronic shutter does not cause sounds and vibrations. Therefore, for example, by providing a mode such as a silent mode, imaging in such a silent mode can be provided to the user.

### <Regarding Shutter Mode>

As described above, the imaging device 10 includes the mechanical shutter and the electronic shutter. Furthermore, the mechanical shutter and the electronic shutter each have different characteristics (advantages). Therefore, a mode in which imaging is performed by using the mechanical shutter, a mode in which imaging is performed by using the electronic shutter, or a mode in which the mechanical shutter and the electronic shutter are switched according to the shutter speed (referred to as automatic mode below) is set.

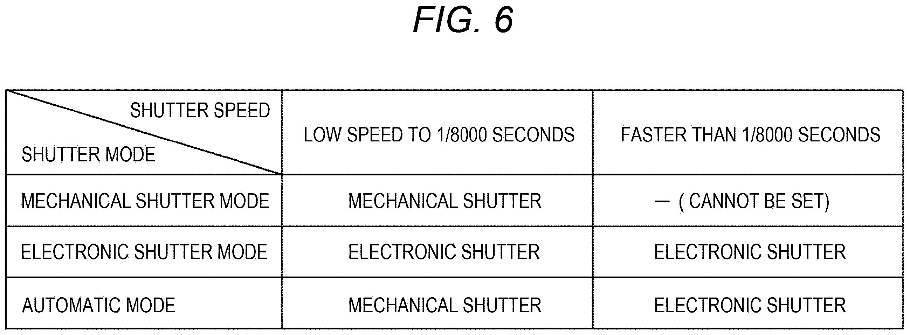

With reference to Fig. 6, the shutter mode will be described. In the table illustrated in Fig. 6, the vertical axis indicates the shutter mode, and the horizontal axis indicates the shutter speed. As illustrated in Fig. 5, the shutter mode includes a mechanical shutter mode, an electronic shutter mode, and an automatic shutter mode.

The shutter mode is set according to a user's instruction or set on the basis of the shutter speed set by the user. The user can set the shutter mode and the shutter speed by operating the operation unit 14 (Fig. 1).

The user can set any one of the mechanical shutter mode, the electronic shutter mode, and the automatic shutter mode, and the control unit 15 controls each unit in the imaging device 10 so that imaging is performed in the set mode. Alternatively, the user sets the shutter speed, and the control unit 15 sets the mechanical shutter mode or the electronic shutter mode according to the set shutter speed, and the control unit 15 controls each unit in the imaging device 10 so that imaging is performed in the set mode.

In any case, the control unit 15 sets the shutter mode and controls each unit in the imaging device 10 so that imaging is performed by the mechanical shutter or the electronic shutter on the basis of the set shutter mode.

For example, in a case where the user sets the shutter mode as the mechanical shutter and in a case where the mechanical shutter is set on the basis of the shutter speed set by the user, the control unit 15 controls the mechanical shutter driving driver 50 to issue the drive instruction to the front curtain driving unit 51 and the rear curtain driving unit 52.

Furthermore, for example, in a case where the user sets the shutter mode as the electronic shutter and in a case where the electronic shutter is set on the basis of the shutter speed set by the user, the control unit 15 makes the electronic shutter control unit 40 perform control, and the electronic shutter control unit 40 controls a shutter operation by controlling the supply of the reset signal to the pixel in the pixel array unit 21 and the timing for reading the signal from the pixel.

Furthermore, for example, in a case where the user sets the shutter mode as the automatic mode, the control unit 15 detects an exposure amount of the image sensor 12, sets the shutter speed according to the exposure amount, sets whether to use the mechanical shutter or the electronic shutter for imaging according to the set shutter mode, and performs imaging according to the setting. The shutter speed at which the mechanical shutter and the electronic shutter are divided can be, for example, 1/8000 seconds.

It is assumed that the shutters be divided at the shutter speed of 1/8000 seconds, and a case from a lower speed to 1/8000 seconds and a case of a speed faster than 1/8000 seconds are divided. Note that, here, the description will be continued as using 1/8000 seconds as a reference. However, the shutter speed to be the reference at which the shutter is switched may be other value. Here, 1/8000 seconds is used as the reference for division. This is because it is assumed that a limit value of the shutter speed at which the mechanical shutter can perform imaging be 1/8000 seconds.

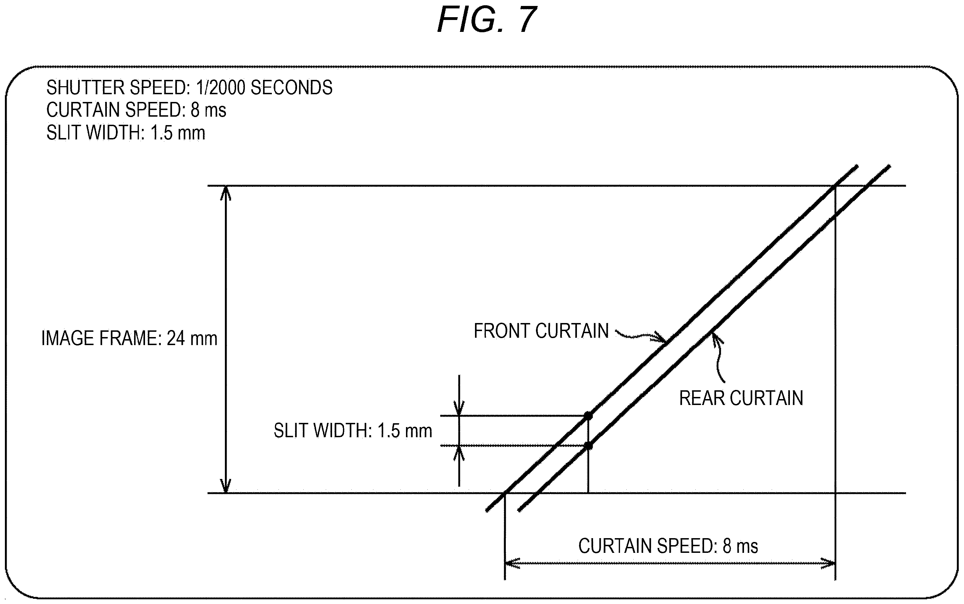

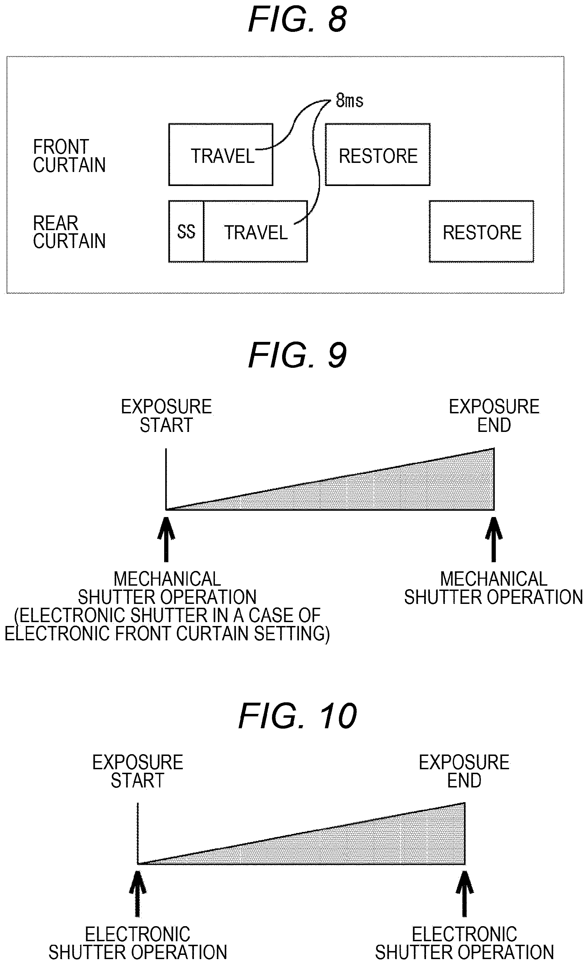

Here, the limit value of the shutter speed of the mechanical shutter 13 will be described. Figs. 7 and 8 are diagrams for explaining a curtain speed at the time of low speed (1/2000 seconds). In the following description, a case is exemplified where a length of an image frame is 24 mm, and the curtain speed and the like will be described. Fig. 7 is a shutter curtain speed diagram in a case where the shutter speed is 1/2000 seconds.

In a case where the shutter speed is 1/2000 seconds, the curtain speed is set to be 8 ms, and a slit width of the front curtain and the rear curtain is set to be 1.5 mm. At the time of low speed, first, the front curtain of the mechanical shutter starts to travel at the speed of 8 ms, and after a time according to the shutter speed (time indicated as SS in Fig. 8), in this case, 1/2000 seconds has elapsed, the rear curtain of the mechanical shutter starts to travel.

After both of the front curtain and the rear curtain travel, restoration processing is performed on the respective curtains. The above movement of the curtains is performed as a single time of imaging when the shutter speed is high. The restoration processing is processing for returning the curtains to a state where the curtains can travel for next imaging.

Furthermore, although not illustrated, for example, the shutter speed of 1/2000 seconds can be realized by setting the curtain speed to 4 ms and the slit width to 3.0 mm. When such setting (setting 2) is compared with the setting illustrated in Fig. 7 (setting 1), the curtain speed in the setting 1 is 8 ms. Whereas, the curtain speed in the setting 2 is set to 4 ms, which is a fast curtain speed. Furthermore, the slit width in the setting 1 is 1.5 mm. Whereas, the slit width in the setting 2 is set to be 3.0 mm which is a wide slit width.

In this way, by changing the curtain speed and the slit width, the same shutter speed can be realized.

For this reason, in a case where the image frame is 24 mm and the shutter speed is 1/8000 seconds, as an example, it is understood that it is sufficient that the curtain speed be set to 2 ms and the slit widths of the front curtain and the rear curtain be set to 1.5 mm.

However, when the shutter speed is high, it is necessary to drive the front curtain and the rear curtain at high speed. When the shutter speed is high, it is necessary to maintain a slit width formed by the front curtain and the rear curtain to be narrow and to drive the shutter at high speed. There is a limit in creating the above state by using only the mechanical shutter 13, and it is difficult to increase the shutter speed.

For this reason, the shutter speed at which the mechanical shutter 13 can perform imaging is limited, and the description will be continued as assuming that the limit value be 1/8000 seconds here. Therefore, there is a possibility that the limit value of the shutter speed at which the mechanical shutter 13 can perform imaging varies depending of the imaging device, and in a case where the present technology is applied, a limit value suitable for the imaging device 10 is set to a reference value for division.

Returning to the description with reference to Fig. 6, in a case where the shutter mode is set to the mechanical shutter mode, imaging by the mechanical shutter 13 is set to be performed at the shutter speed from a low shutter speed to 1/8000 seconds. On the other hand, in a case where the shutter mode is set to the mechanical shutter mode, it is difficult to perform imaging at the shutter speed equal to or faster than 1/8000 seconds because of the reasons described above. Therefore, the shutter speed equal to or faster than 1/8000 seconds cannot be set.

In a case of the mechanical shutter mode, as illustrated in Fig. 9, the actuator of the front curtain driving unit 51 (Fig. 2) is driven at the time of the start of the exposure so that the front curtain of the mechanical shutter 13 travels, and the actuator of the rear curtain driving unit 52 (Fig. 2) is driven at the time of the end of the exposure so that the rear curtain travels.

Note that it is possible to provide the imaging device 10 using the electronic shutter as the front curtain. In a case of such an imaging device 10, control of the electronic shutter as the front curtain (operation for resetting each pixel) is performed by the electronic shutter control unit 40 at the time of the start of the exposure, and the rear curtain travels by the rear curtain driving unit 52 (Fig. 2) at the time of the end of the exposure.

In a case where the shutter mode is set to the electronic shutter mode, it is set that the electronic shutter performs imaging at the shutter speed from the low shutter speed to 1/8000 seconds. Furthermore, in a case where the shutter mode is set to the electronic shutter mode, it is set that the electronic shutter performs imaging when the shutter speed is faster than 1/8000 seconds. In other words, in a case where the shutter mode is set to the electronic shutter mode, the electronic shutter performs imaging regardless of the shutter speed.

In a case of the electronic shutter mode, as illustrated in Fig. 10, the front curtain is controlled (reset operation) by the electronic shutter control unit 40 (Fig. 2) at the time of the start of the exposure, and the rear curtain is controlled (reading operation) by the electronic shutter control unit 40 (Fig. 2) at the time of the end of the exposure.

In a case where the shutter mode is set to the automatic shutter mode, it is set that the mechanical shutter performs imaging at the shutter speed from the low shutter speed to 1/8000 seconds. Furthermore, in a case where the shutter mode is set to the automatic shutter mode, it is set that the electronic shutter performs imaging when the shutter speed is faster than 1/8000 seconds.

In a case of the automatic shutter mode, the mechanical shutter performs imaging at the shutter speed at the shutter speed from the low shutter speed to 1/8000 seconds. Therefore, imaging is performed as in the mechanical shutter mode. In other words, as illustrated in Fig. 9, the actuator is driven by the front curtain driving unit 51 (Fig. 2) at the time of the start of the exposure so that the front curtain group 101 travels, and the actuator is driven by the rear curtain driving unit 52 (Fig. 2) at the time of the end of the exposure so that the rear curtain group 102 travels.

Furthermore, in a case of the automatic shutter mode, in a case where the shutter speed is faster than 1/8000 seconds, the electronic shutter performs imaging. Therefore, imaging is performed as in the electronic shutter mode. In other words, as illustrated in Fig. 10, the front curtain is controlled by the electronic shutter control unit 40 (Fig. 2) at the time of the start of the exposure, and the rear curtain is controlled by the electronic shutter control unit 40 (Fig. 2) at the time of the end of the exposure.

By the way, in a case where the shutter speed is set to the automatic shutter mode, since the mechanical shutter and the electronic shutter are switched according to the shutter speed, there is a possibility that some users may feel uncomfortable.

For example, at the time of the exposure control by the mechanical shutter 13, operation sounds and vibrations generated when the front curtain group 101 of the mechanical shutter 13 travels are generated. However, at the time of the exposure control by the electronic shutter, such operation sounds and vibration are not generated. Furthermore, similarly, at the time of the exposure control by the mechanical shutter 13, operation sounds and vibrations generated when the rear curtain group 102 of the mechanical shutter 13 travels are generated. However, at the time of the exposure control by the electronic shutter, such operation sounds and vibration are not generated.

When the mechanical shutter 13 performs imaging, the user can feel the operation sounds and vibration of the shutter. However, when the electronic shutter performs imaging, the user cannot feel such operation sounds and vibration. For example, a case is assumed where, although the mechanical shutter 13 has performed imaging, the shutter speed increases, and the shutter used for imaging is switched from the mechanical shutter 13 to the electronic shutter according to the determination by the control unit 15. In such a case, the user suddenly stops feeling the operation sounds and vibration, and for example, there is a possibility that the user feels anxious about whether imaging is not performed.

Furthermore, some users feel that imaging is performed according to the operation sounds and vibration of the mechanical shutter 13. In the automatic shutter mode, such feeling is caused at the time of using the mechanical shutter 13 and is not caused at the time of using the electronic shutter, in other words, imaging includes imaging from which the user feels that imaging is performed and imaging from which the user feels that the imaging is not performed. Therefore, there is a possibility that the user feels troublesome or anxious as described above.

Therefore, a mechanism will be described that does not make the user feel troublesome or anxious by making the user feel that imaging is performed even in the automatic shutter mode.

Note that, in the electronic shutter mode, the operation sounds and vibration of the mechanical shutter 13 cannot be obtained, and the user cannot feel that imaging is performed. However, the user sets the electronic shutter mode and understands that the mode is different from the mechanical shutter mode at the time of setting the electronic shutter mode. Therefore, even though the user cannot feel that imaging is performed, it is considered that there is no possibility that the user feels troublesome or anxious.

Therefore, here, the description will be made regarding that the feeling can be obtained even in the automatic shutter mode. However, the present technology to be described below can be certainly applied in the electronic shutter mode.

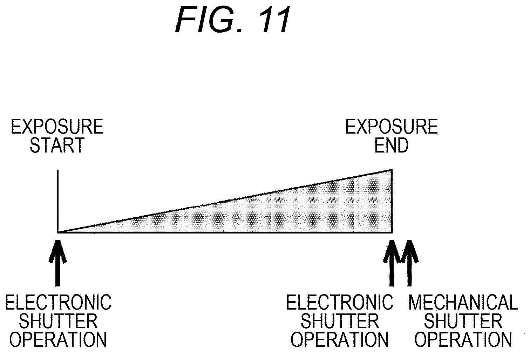

In a case where the mode is the automatic shutter mode and the shutter speed is faster than 1/8000 seconds, imaging is performed by the electronic shutter. As illustrated in Fig. 11, after the rear curtain is controlled by the electronic shutter at the time of the end of the exposure, the mechanical shutter 13 is driven.

By controlling the rear curtain by the electronic shutter by the electronic shutter control unit 40, imaging coping with a case where the shutter speed is fast can be performed. Moreover, by driving the mechanical shutter 13 after the rear curtain has been controlled by the electronic shutter by the electronic shutter control unit 40, the operation sounds and vibration caused by driving the mechanical shutter 13 are generated. Therefore, it is possible to provide the above described feeling to the user.

In a case where the mechanical shutter 13 is driven after the rear curtain has been controlled by the electronic shutter control unit 40, both of the front curtain and the rear curtain, only the front curtain, or only the rear curtain of the mechanical shutter 13 is driven at that time. Furthermore, the traveling speeds of the front curtain and the rear curtain may be a speed that can be changed according to the shutter speed or a fixed speed.

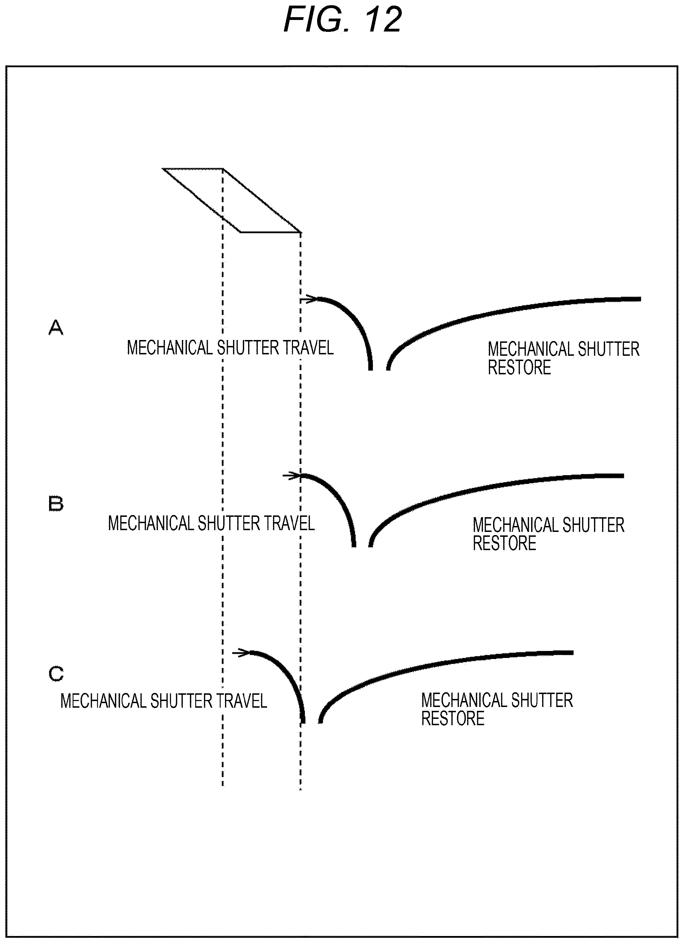

The control of the rear curtain by the electronic shutter and a timing of the operation of the mechanical shutter 13 will be described with reference to Fig. 12.

A of Fig. 12 is a diagram illustrating an example of the timing of the operation of the mechanical shutter 13. As illustrated in A of Fig. 12, after the end of the exposure by the electronic shutter, in other words, after the end of reading of the pixel signal from the pixel array unit 21 (Fig. 2), the mechanical shutter 13 is driven. In other words, in this case, after the exposure by the electronic shutter ends, the mechanical shutter 13 travels so as to perform a closing operation, and thereafter, the mechanical shutter 13 travels so as to perform a restore operation.

In the example illustrated in A of Fig. 12, at the same time or after the exposure by the electronic shutter ends, the control unit 15 instructs the mechanical shutter driving driver 50 to issue the drive instruction to the front curtain driving unit 51 or the rear curtain driving unit 52. As a result, the mechanical shutter driving driver 50 issues the drive instruction to the front curtain driving unit 51 or the rear curtain driving unit 52. In the following description, description will be continued while using a case where the instruction is issued to the front curtain driving unit 51 (a case where front curtain group 101 travels) as an example. However, similar processing is performed in a case where the instruction is issued to the rear curtain driving unit 52 (a case where rear curtain group 102 travels).

The drive instruction is issued to the front curtain driving unit 51 so that the front curtain driving unit 51 starts to supply power to the motor. The drive of the motor makes the front curtain group 101 of the mechanical shutter 13 travel. To start the travel of the front curtain group 101 of the mechanical shutter 13, in this way, power is supplied to the motor, and the motor is actually driven at the time when the voltage reaches a predetermined voltage. Therefore, a time from the issuance of the instruction to the start of the actual travel (described as travel preparation time) is required.

In each of A to C of Fig. 12, an arrow indicates a travel preparation time. It is assumed that the length of the arrow indicate the length of the travel preparation time. Furthermore, a starting point of the arrow indicates a point at which the control unit 15 instructs the mechanical shutter 13 to travel, and an ending point indicates a point at which the mechanical shutter 13 starts to travel.

In A of Fig. 12, the control unit 15 instructs the front curtain group 101 of the mechanical shutter 13 to travel at the time when the exposure ends (reading of pixel signal to final line of pixel array unit 21 ends), and after the travel preparation time has elapsed, the front curtain group 101 of the mechanical shutter 13 travels. For example, in a case where the global shutter type is applied as the electronic shutter, the time when the reading from all the pixels has ended is assumed as the time when the exposure has ended, at that time or after that, the travel of the front curtain group 101 of the mechanical shutter 13 is instructed, and after the travel preparation time has elapsed, the front curtain group 101 of the mechanical shutter 13 travels.

A timing of an operation of the mechanical shutter illustrated in B of Fig. 12 indicates an example of a timing considering the travel preparation time. At the timing indicated in B of Fig. 12, the control unit 15 issues the instruction for making the front curtain group 101 of the mechanical shutter 13 travel to the mechanical shutter driving driver 50 in advance at a timing before the exposure by the electronic shutter ends so that the front curtain group 101 of the mechanical shutter 13 starts to travel at the same time as the end of the exposure by the electronic shutter.

For example, in a case where the global shutter type is applied as the electronic shutter, the time when reading from all the pixels has ended is assumed as the time when the exposure has ended, and a traveling instruction is issued to the mechanical shutter 13 at the time earlier than the time when reading from all the pixels ends by the travel preparation time of the mechanical shutter 13 so that the mechanical shutter 13 starts to travel at that time.

In other words, the instruction to make the front curtain group 101 of the mechanical shutter 13 travel is issued at the time earlier than a time when the exposure is scheduled to end by the travel preparation time. In this way, by issuing the instruction to make the front curtain group 101 of the mechanical shutter 13 travel at the time before the exposure end, the front curtain group 101 of the mechanical shutter 13 can start to travel at the time of the end of the exposure (substantially at the same time as exposure end).

C of Fig. 12 is a diagram illustrating another example of the timing of the operation of the mechanical shutter 13. The example of the timing indicated in C of Fig. 12 is an example in which the mechanical shutter 13 starts to travel at the fastest timing from among timings that do not pass the reading of each line in the pixel array unit 21.

At the traveling timing of the front curtain group 101 of the mechanical shutter 13 indicated in C of Fig. 12, the front curtain group 101 of the mechanical shutter 13 is caused to travel as soon as possible without disturbing the operation for ending the exposure of the electronic shutter. Control is performed such that the front curtain group 101 of the mechanical shutter 13 follows and passes the line on which the electronic shutter has completed the exposure.

For example, in a case where the rolling shutter type is applied as the electronic shutter, reading is sequentially performed from the top of the pixel array unit 21 (for each line), and the front curtain group 101 of the mechanical shutter 13 starts to travel so that the front curtain group 101 of the mechanical shutter 13 does not cover the line on which reading is performed. Furthermore, the mechanical shutter 13 is driven so that the travel of the front curtain group 101 of the mechanical shutter 13 ends at the time or after the time when the final line has been read.

When the front curtain group 101 of the mechanical shutter 13 travels in this way, the travel of the front curtain group 101 of the mechanical shutter 13 ends substantially at the same time when reading of the final line of the pixel array unit 21 ends. In other words, at the traveling timing of the front curtain group 101 of the mechanical shutter 13 indicated in C of Fig. 12,the travel of the front curtain group 101 of the mechanical shutter 13 is controlled so as to end the travel of the front curtain group 101 of the mechanical shutter 13 substantially at the same time as the end of the exposure.

In this way, after the end of the exposure under the control by the electronic shutter (example in A of Fig. 12), immediately after the end (example in B of Fig. 12), or in the middle of the control of the exposure (example in C of Fig. 12), the front curtain group 101 (or rear curtain group 101) of the mechanical shutter 13 starts to travel.

When the exposure is controlled by the electronic shutter, by also driving the mechanical shutter 13, it is possible to provide the feeling equivalent to that caused when the exposure is controlled by the mechanical shutter 13 to the user as described above.

In the above embodiment, an example has been described in which the electronic shutter and the front curtain group 101 of the mechanical shutter 13 travel when imaging (exposure) is performed once. In this way, the mechanical shutter 13 may be driven each time when imaging is performed by the electronic shutter. Furthermore, as will be described below, the mechanical shutter 13 may be driven when the plurality of times of imaging is performed.

For example, in a continuous shooting mode and the like, the electronic shutter which can perform high-frame-rate continuous shooting is often applied regardless of the shutter speed. At the time of continuous shooting, it is possible not to drive the mechanical shutter 13 at each imaging. At the time of continuous shooting, for example, it is possible that the mechanical shutter 13 is driven only at the time of the end of the continuous shooting (at the time when user instructs to end continuous shooting) and the mechanical shutter 13 is not driven during the continuous shooting.

In this way, an operation can be performed in which the number of times of the drive the mechanical shutter 13 (the number of times of travel of front curtain group 101 or rear curtain group 102) does not coincide with the number of times of imaging (the number of times of exposure control by electronic shutter).

Furthermore, for example, there is case where the number of images that can be imaged is set according to a capacity of the buffer 22 (Fig. 2), or the like at the time of continuous shooting. The present technology can be applied as a mechanism that notifies the user of that the number of imaged images has reached the number of images that can be imaged by driving the mechanical shutter 13 at the time when the number of the imaged images reaches the number of images that can be imaged (at the time when continuous shooting is substantially terminated or at the time when images exceeds capacity of buffer 22 if one more image is imaged).

The control unit 15 monitors a remaining amount of the buffer 22 at the time of continuous shooting, detects the time when the number of images imaged by continuous shooting reach the number of images that can be imaged, and instructs the mechanical shutter driving driver 50 to start to travel the mechanical shutter 13 when detecting the above.

Note that, even in this case, in consideration of the travel preparation time, the instruction for starting to make the mechanical shutter 13 travel may be issued to the mechanical shutter driving driver 50 at the time before the time when the number of imaged images has reached the number of images than can be imaged by the travel preparation time.

In this way, as in the embodiment described above, the present technology can be applied so as to make the user feel that imaging is performed and can be applied so as to notify the user of some information, a state of the imaging device, or the like.

Furthermore, as an example of another type of imaging, there is a case where a plurality of images is imaged as changing imaging conditions in the continuous shooting in a case of imaging referred to as bracket shooting and the like. When the plurality of images is imaged as changing the imaging conditions, imaging with different shutter speeds is performed in some cases. In such a case, in the example described above, there is a case where imaging is performed at the shutter speeds faster and slower than 1/8000 seconds.

For example, when three images are imaged as changing the imaging conditions, there is a possibility that two images are imaged at a shutter speed slower than 1/8000 seconds and one image is imaged at a shutter speed faster than 1/8000 seconds. In such a case and in a case where the shutter mode is set to the automatic shutter mode, the mechanical shutter 13 performs imaging at the shutter speed slower than 1/8000 seconds, and the electronic shutter performs imaging at the shutter speed faster than 1/8000 seconds.

At the time of such imaging, when the electronic shutter performs imaging, as described above, the mechanical shutter 13 may travel at the time when the exposure control by the electronic shutter ends.

Alternatively, when the plurality of images is imaged, when not only the electronic shutter but also the mechanical shutter 13 perform imaging, the user feels that imaging is performed at the time of imaging by the mechanical shutter 13. Therefore, the control for making the mechanical shutter 13 travel when the exposure control by the electronic shutter ends may be omitted.

Furthermore, as still another example of imaging, some imaging devices have a function for generating an image with a high dynamic range by imaging an image by long-time exposure and an image by short-time exposure and performing predetermined processing on the images. In such an imaging device, in a case where the electronic shutter controls imaging with long-time exposure and short-time exposure, as in the above embodiment, the mechanical shutter 13 may travel after the control by the electronic shutter regarding the long-time exposure and the short-time exposure has ended.

In this way, in a case where the plurality of images is imaged, it is possible to travel the mechanical shutter 13 at least once in the plurality of times of imaging. Furthermore, the travel of the mechanical shutter 13 at least once in the plurality of times of imaging may be performed at the time of imaging (exposure control) by the mechanical shutter 13.

According to the present technology, as basically performing imaging by using the mechanical shutter 13, it is possible to make seamless transition without making the user concerning the limit value of the mechanical shutter 13 with respect to the shutter speed at which imaging by the mechanical shutter 13 is not possible. Therefore, the user can image images with the feeling same as the feeling obtained at the time of imaging images by the mechanical shutter 13.

Furthermore, although the shutter speed may be specified by a photographer or by the imaging device, in any of these cases, it is considered that the photographer intends to change the exposure such as the shutter speed and does not intend to change imaging feedback.

Furthermore, it is considered that the face that it is not possible to respond to a request for simply increasing only the shutter speed without changing a shutter method, a silent mode, or the like is different from the user's intention. Therefore, to change the shutter speed without changing other settings and to constantly obtain the same imaging feedback at any shutter speed by applying the present technology are important for a point such that focus on imaging is not prevented. Furthermore, strengths of the mechanical shutter 13 and the electronic shutter can be received, and this is a big advantage for the photographer.

In this way, the present technology is effective in a point that, in a case where imaging by the electronic shutter and imaging by the mechanical shutter 13 are switched, the same imaging feedback can be provided regardless of the shutter speed.

### <Regarding Recording Medium>

The above-mentioned series of processing can be performed by hardware or software. In a case where the series of the processing is performed by the software, a program included in the software is installed in a computer. Here, the computer includes a computer incorporated in dedicated hardware and, for example, a general personal computer and the like which can perform various functions by installing various programs.

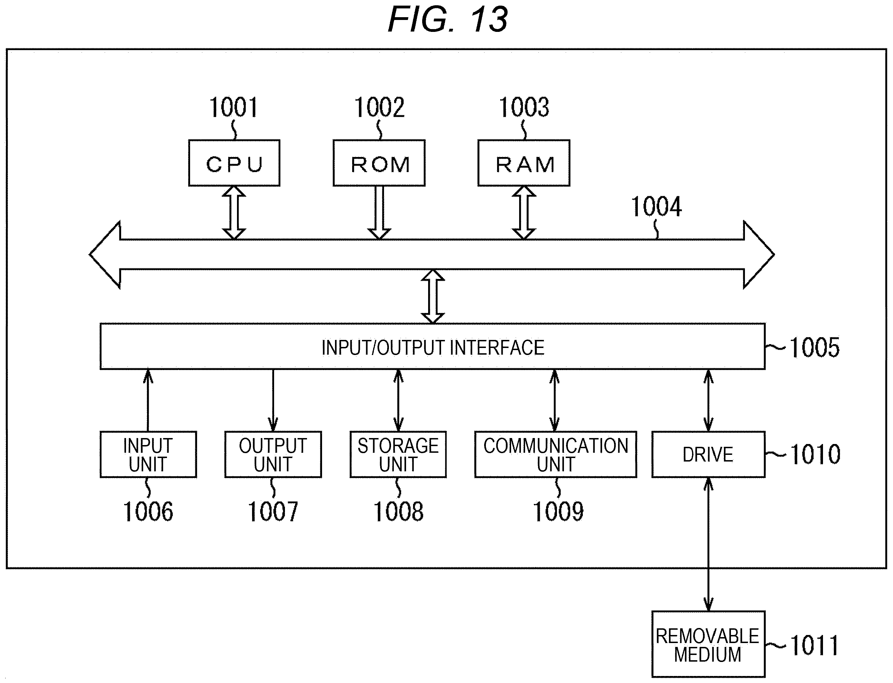

Fig. 13 is a block diagram of an exemplary configuration of hardware of the computer for performing the above-mentioned series of processing by the program. In a computer, a central processing unit (CPU) 1001, a read only memory (ROM) 1002, and a random access memory (RAM) 1003 are connected to each other with a bus 1004. In addition, an input/output interface 1005 is connected to the bus 1004. An input unit 1006, an output unit 1007, a storage unit 1008, a communication unit 1009, and a drive 1010 are connected to the input/output interface 1005.

The input unit 1006 includes a keyboard, a mouse, a microphone, and the like. The output unit 1007 includes a display, a speaker, and the like. The storage unit 1008 includes a hard disk, a non-volatile memory, and the like. The communication unit 1009 includes a network interface and the like. The drive 1010 drives a removable medium 1011 such as a magnetic disk, an optical disk, an optical magnetic disk, or a semiconductor memory.

In the computer configured as described above, the CPU 1001 loads, for example, a program stored in the storage unit 1008 to the RAM 1003 via the input/output interface 1005 and the bus 1004 and executes the program so that the above-mentioned series of processing is performed.

The program executed by the computer (CPU 1001) can be recorded in the removable medium 1011, for example, as package media, or the like to be provided. Furthermore, the program can be provided via wired or wireless transmission media such as a local area network, the Internet, and digital satellite broadcasting.

In the computer, the program can be installed to the storage unit 1008 via the input/output interface 1005 by mounting the removable medium 1011 in the drive 1010. Furthermore, the program can be received by the communication unit 1009 via the wired or wireless transmission media and installed to the storage unit 1008. In addition, the program can be previously installed to the ROM 1002 and the storage unit 1008.

Note that, the program executed by the computer may be a program in which processing is executed along the order described in the present specification in a time series manner and a program in which the processing is executed in parallel or at a necessary timing, for example, when a call has been made.

Furthermore, in the present specification, the system indicates a whole device including a plurality of devices.

Note that the effects described in the present specification are only exemplary and not limited to these. Furthermore, there may be an additional effect.

Note that the embodiment of the present technology is not limited to the above-mentioned embodiments, and various changes can be made without departing from the scope of the present technology.

### REFERENCE SIGNS LIST

- 10: Imaging device
- 11: Lens unit
- 12: Image sensor
- 13: Mechanical shutter
- 14: Operation unit
- 15: Control unit
- 16: Image processing unit
- 17: Display unit
- 18: Codec processing unit
- 19: Recording unit
- 21: Pixel array unit
- 30: Image processing LSI
- 40: Electronic shutter control unit
- 50: Mechanical shutter driving driver
- 51: Front curtain driving unit
- 52: Rear curtain driving unit

## Claims

1. An imaging device (10) comprising:
an imaging element (12);
a mechanical shutter (13) configured to expose the imaging element by controlling a light shielding state of light entering the imaging element;
an electronic shutter configured to expose the imaging element by controlling a reset timing to start the exposure and a reading timing to end the exposure of the imaging element;
an electronic shutter driving unit (40) configured to make the electronic shutter travel at the reset timing and at the reading timing; and
a mechanical shutter driving unit (50) configured to make the mechanical shutter travel after the exposure of the imaging element by the electronic shutter ends at the reading timing.

2. The imaging device according to claim 1, further comprising:
a control unit configured to issue a drive instruction to the mechanical shutter driving unit, wherein
the control unit issues the drive instruction at a time when the exposure of the imaging element by the electronic shutter ends.

3. The imaging device according to claim 1, further comprising:
a control unit configured to issue a drive instruction to the mechanical shutter driving unit, wherein
the control unit issues the drive instruction before a time when the exposure of the imaging element by the electronic shutter ends by a period of time from reception of the drive instruction by the mechanical shutter driving unit to start of the drive.

4. The imaging device according to claim 1, further comprising:
a control unit configured to issue a drive instruction to the mechanical shutter driving unit, wherein
the control unit issues the drive instruction so that travel of the mechanical shutter ends substantially at a same time when the exposure of the imaging element by the electronic shutter ends.

5. The imaging device according to claim 1, further comprising:
a control unit configured to issue a drive instruction to the mechanical shutter driving unit, wherein
the control unit issues the drive instruction at a time after start of the exposure of the imaging element by the electronic shutter.

6. The imaging device according to claim 1, further comprising:
a control unit configured to set a mode to either one of a first mode in which exposure is performed by the mechanical shutter or a second mode in which exposure is performed by the electronic shutter, wherein
in a case where the control unit sets the mode to the second mode, the mechanical shutter driving unit makes the mechanical shutter travel after the exposure of the imaging element by the electronic shutter ends.

7. The imaging device according to claim 1, further comprising:
a control unit configured to set a mode to a continuous shooting mode; and
a storage unit configured to store image data imaged in the continuous shooting mode, wherein
in a case where the control unit sets the continuous shooting mode, the mechanical shutter driving unit makes the mechanical shutter travel at a time when an amount of image data reaches a capacity of the storage unit.

8. The imaging device according to claim 1, further comprising:
a control unit configured to set a mode to a continuous shooting mode, wherein
in a case where the control unit sets the continuous shooting mode, the mechanical shutter driving unit makes the mechanical shutter travel at a time when a number of images reaches a predetermined number of imaged images.

9. The imaging device according to claim 1, wherein
the mechanical shutter includes a focal plane shutter.

10. The imaging device according to claim 1, wherein
the electronic shutter includes a rolling shutter or a global shutter.

11. An imaging method of an imaging device (10) including
an imaging element (12),
a mechanical shutter (13) that exposes the imaging element by controlling a light shielding state of light entering the imaging element, and
an electronic shutter that exposes the imaging element by controlling a reset timing to start the exposure and a reading timing to end the exposure of the imaging element such that the electronic shutter is made to travel at the reset timing and at the reading timing, the method comprising:
a step of making the mechanical shutter travel after the exposure of the imaging element by the electronic shutter ends at the reading timing.

12. A computer readable program for causing a computer to control an imaging device to perform an imaging method according to claim 11.

## Patentansprüche

1. Bildgebungsvorrichtung (10), umfassend:
ein Bildgebungselement (12);
einen mechanischen Verschluss (13), der ausgelegt ist, das Bildgebungselement durch Steuern eines Lichtabschirmungszustands von in das Bildgebungselement eintretendem Licht zu belichten;
einen elektronischen Verschluss, der ausgelegt ist, das Bildgebungselement durch Steuern einer Rücksetzzeit zum Starten der Belichtung und einer Auslesezeit zum Beenden der Belichtung des Bildgebungselements zu belichten;
eine elektronische Verschlussantriebseinheit (40), die ausgelegt ist, zu bewirken, dass sich der elektronische Verschluss zu der Rücksetzzeit und zu der Auslesezeit bewegt; und
eine mechanische Verschlussantriebseinheit (50), die ausgelegt ist, zu bewirken, dass sich der mechanische Verschluss bewegt, nachdem die Belichtung des Bildgebungselements durch den elektronischen Verschluss zu der Auslesezeit endet.

2. Bildgebungsvorrichtung nach Anspruch 1, ferner umfassend:
eine Steuereinheit, die ausgelegt ist, eine Antriebsanweisung zu der mechanischen Verschlussantriebseinheit auszugeben, wobei die Steuereinheit die Antriebsanweisung zu einer Zeit ausgibt, wenn die Belichtung des Bildgebungselements durch den elektronischen Verschluss endet.

3. Bildgebungsvorrichtung nach Anspruch 1, ferner umfassend:
eine Steuereinheit, die ausgelegt ist, eine Antriebsanweisung zu der mechanischen Verschlussantriebseinheit auszugeben, wobei die Steuereinheit die Antriebsanweisung um eine Zeitdauer von einem Empfang der Antriebsanweisung durch die mechanische Verschlussantriebseinheit bis zu einem Start des Antriebs vor einer Zeit ausgibt, wenn die Belichtung des Bildgebungselements durch den elektronischen Verschluss endet.

4. Bildgebungsvorrichtung nach Anspruch 1, ferner umfassend:
eine Steuereinheit, die ausgelegt ist, eine Antriebsanweisung zu der mechanischen Verschlussantriebseinheit auszugeben, wobei die Steuereinheit die Antriebsanweisung derart ausgibt, dass eine Bewegung des mechanischen Verschlusses im Wesentlichen zu einer selben Zeit endet, wenn die Belichtung des Bildgebungselements durch den elektronischen Verschluss endet.

5. Bildgebungsvorrichtung nach Anspruch 1, ferner umfassend:
eine Steuereinheit, die ausgelegt ist, eine Antriebsanweisung zu der mechanischen Verschlussantriebseinheit auszugeben, wobei die Steuereinheit die Antriebsanweisung zu einer Zeit nach einem Start der Belichtung des Bildgebungselements durch den elektronischen Verschluss ausgibt.

6. Bildgebungsvorrichtung nach Anspruch 1, ferner umfassend:
eine Steuereinheit, die ausgelegt ist, einen Modus auf entweder einen ersten Modus, in dem eine Belichtung durch den mechanischen Verschluss durchgeführt wird, oder einen zweiten Modus, in dem eine Belichtung durch den elektronischen Verschluss durchgeführt wird, einzustellen, wobei
in einem Fall, dass die Steuereinheit den Modus auf den zweiten Modus einstellt, die mechanische Verschlussantriebseinheit den mechanischen Verschluss veranlasst, sich zu bewegen, nachdem die Belichtung des Bildgebungselements durch den elektronischen Verschluss endet.

7. Bildgebungsvorrichtung nach Anspruch 1, ferner umfassend:
eine Steuereinheit, die ausgelegt ist, einen Modus auf einen Serienaufnahmemodus einzustellen; und
eine Speichereinheit, die ausgelegt ist, in dem Serienaufnahmemodus aufgenommene Bilddaten zu speichern, wobei
in einem Fall, dass die Steuereinheit den Serienaufnahmemodus einstellt, die mechanische Verschlussantriebseinheit den mechanischen Verschluss veranlasst, sich zu einer Zeit zu bewegen, wenn eine Menge an Bilddaten eine Kapazität der Speichereinheit erreicht.

8. Bildgebungsvorrichtung nach Anspruch 1, ferner umfassend:
eine Steuereinheit, die ausgelegt ist, einen Modus auf einen Serienaufnahmemodus einzustellen, wobei in einem Fall, dass die Steuereinheit den Serienaufnahmemodus einstellt, die mechanische Verschlussantriebseinheit den mechanischen Verschluss veranlasst, sich zu einer Zeit zu bewegen, wenn eine Anzahl von Bildern eine vorbestimmte Anzahl von aufgenommenen Bildern erreicht.

9. Bildgebungsvorrichtung nach Anspruch 1, wobei der mechanische Verschluss einen Schlitzverschluss umfasst.

10. Bildgebungsvorrichtung nach Anspruch 1, wobei der elektronische Verschluss einen rollenden Verschluss oder einen globalen Verschluss umfasst.

11. Bildgebungsverfahren einer Bildgebungsvorrichtung (10), die umfasst
ein Bildgebungselement (12),
einen mechanischen Verschluss (13), der das Bildgebungselement durch Steuern eines Lichtabschirmungszustands von in das Bildgebungselement eintretendem Licht belichtet, und
einen elektronischen Verschluss, der das Bildgebungselement durch Steuern einer Rücksetzzeit zum Starten der Belichtung und einer Auslesezeit zum Beenden der Belichtung des Bildgebungselements belichtet, so dass der elektronische Verschluss veranlasst wird, sich zu der Rücksetzzeit und zu der Auslesezeit zu bewegen, wobei das Verfahren umfasst:
einen Schritt eines Veranlassens des mechanischen Verschlusses, sich zu bewegen, nachdem die Belichtung des Bildgebungselements durch den elektronischen Verschluss zu der Auslesezeit endet.

12. Computerlesbares Programm zum Bewirken, dass ein Computer eine Bildgebungsvorrichtung steuert, um ein Bildgebungsverfahren nach Anspruch 11 durchzuführen.

## Revendications

1. Dispositif (10) d'imagerie comportant :
un élément (12) d'imagerie ;
un obturateur mécanique (13) configuré pour exposer l'élément d'imagerie en commandant un état d'occultation de lumière d'une lumière entrant dans l'élément d'imagerie ;
un obturateur électronique configuré pour exposer l'élément d'imagerie en commandant un instant de réinitialisation pour commencer l'exposition et un instant de lecture pour mettre fin à l'exposition de l'élément d'imagerie ;
une unité (40) d'entraînement d'obturateur électronique configurée pour faire se déplacer l'obturateur électronique à l'instant de réinitialisation et à l'instant de lecture ; et
une unité (50) d'entraînement d'obturateur mécanique configurée pour faire se déplacer l'obturateur mécanique après que l'exposition de l'élément d'imagerie par l'obturateur électronique a pris fin à l'instant de lecture.

2. Dispositif d'imagerie selon la revendication 1, comportant en outre :
une unité de commande configurée pour délivrer une instruction d'entraînement à l'unité d'entraînement d'obturateur mécanique,
l'unité de commande délivrant l'instruction d'entraînement à un moment où l'exposition de l'élément d'imagerie par l'obturateur électronique prend fin.

3. Dispositif d'imagerie selon la revendication 1, comportant en outre :
une unité de commande configurée pour délivrer une instruction d'entraînement à l'unité d'entraînement d'obturateur mécanique,
l'unité de commande délivrant l'instruction d'entraînement avant un moment où l'exposition de l'élément d'imagerie par l'obturateur électronique prend fin, d'une période allant de la réception de l'instruction d'entraînement par l'unité d'entraînement d'obturateur mécanique jusqu'au début de l'entraînement.

4. Dispositif d'imagerie selon la revendication 1, comportant en outre :
une unité de commande configurée pour délivrer une instruction d'entraînement à l'unité d'entraînement d'obturateur mécanique,
l'unité de commande délivrant l'instruction d'entraînement de telle sorte que le déplacement de l'obturateur mécanique prenne fin sensiblement en même temps que l'exposition de l'élément d'imagerie par l'obturateur électronique prend fin.

5. Dispositif d'imagerie selon la revendication 1, comportant en outre :
une unité de commande configurée pour délivrer une instruction d'entraînement à l'unité d'entraînement d'obturateur mécanique,
l'unité de commande délivrant l'instruction d'entraînement à un moment postérieur au début de l'exposition de l'élément d'imagerie par l'obturateur électronique.

6. Dispositif d'imagerie selon la revendication 1, comportant en outre :
une unité de commande configurée pour spécifier un mode comme étant l'un ou l'autre parmi un premier mode dans lequel l'exposition est effectuée par l'obturateur mécanique et un second mode dans lequel l'exposition est effectuée par l'obturateur électronique,
dans un cas où l'unité de commande spécifie le mode comme étant le second mode, l'unité d'entraînement d'obturateur mécanique faisant se déplacer l'obturateur mécanique après que l'exposition de l'élément d'imagerie par l'obturateur électronique a pris fin.

7. Dispositif d'imagerie selon la revendication 1, comportant en outre :
une unité de commande configurée pour spécifier un mode comme étant un mode de prise de vues continue ; et
une unité de stockage configurée pour stocker des données d'image acquises dans le mode de prise de vues continue,
dans un cas où l'unité de commande spécifie le mode de prise de vues continue, l'unité d'entraînement d'obturateur mécanique faisant se déplacer l'obturateur mécanique à un moment où une quantité de données d'image atteint une capacité de l'unité de stockage.

8. Dispositif d'imagerie selon la revendication 1, comportant en outre :
une unité de commande configurée pour spécifier un mode comme étant un mode de prise de vues continue,
dans un cas où l'unité de commande spécifie le mode de prise de vues continue, l'unité d'entraînement d'obturateur mécanique faisant se déplacer l'obturateur mécanique à un moment où un nombre d'images atteint un nombre prédéterminé d'images acquises.

9. Dispositif d'imagerie selon la revendication 1, l'obturateur mécanique comprenant un obturateur de plan focal.

10. Dispositif d'imagerie selon la revendication 1, l'obturateur électronique comprenant un obturateur roulant ou un obturateur global.

11. Procédé d'imagerie d'un dispositif (10) d'imagerie comprenant
un élément (12) d'imagerie,
un obturateur mécanique (13) qui expose l'élément d'imagerie en commandant un état d'occultation de lumière d'une lumière entrant dans l'élément d'imagerie, et
un obturateur électronique qui expose l'élément d'imagerie en commandant un instant de réinitialisation pour commencer l'exposition et un instant de lecture pour mettre fin à l'exposition de l'élément d'imagerie de telle façon que l'obturateur électronique soit amené à se déplacer à l'instant de réinitialisation et à l'instant de lecture, le procédé comportant :
une étape consistant à faire se déplacer l'obturateur mécanique après que l'exposition de l'élément d'imagerie par l'obturateur électronique a pris fin à l'instant de lecture.

12. Programme lisible par ordinateur destiné à amener un ordinateur à commander un dispositif d'imagerie pour réaliser un procédé d'imagerie selon la revendication 11.
